Europäisches Patentamt

European Patent Office

Office européen des brevets

(19)

(11) Numéro de publication: **0 095 010**
**A1**

## (12) DEMANDE DE BREVET EUROPEEN

(21) Numéro de dépôt: 82830143.2

(22) Date de dépôt: 25.05.82

(51) Int. Cl.³: **B 29 F 3/00**
**B 27 J 5/00, F 16 L 59/04**
**B 29 F 3/04**

(43) Date de publication de la demande:
30.11.83 Bulletin 83/48

(84) Etats contractants désignés:
AT BE CH DE FR GB LI LU NL SE

(71) Demandeur: Bartoli, Luigi
Via del Porto, 84
I-47033 Cattolica (FO)(IT)

(71) Demandeur: Bartoli, Maurizio
Via Garibaldi, 57
I-47033 Cattolica (FO)(IT)

(71) Demandeur: Tonini, Adelina
Via del Porto, 84
I-47033 Cattolica (FO)(IT)

(72) Inventeur: Bartoli, Luigi
Via del Porto, 84
I-47033 Cattolica (FO)(IT)

(72) Inventeur: Bartoli, Maurizio
Via Garibaldi, 57
I-47033 Cattolica (FO)(IT)

(72) Inventeur: Tonini, Adelina
Via del Porto, 84
I-47033 Cattolica (FO)(IT)

(74) Mandataire: Baldi, Claudio
Viale della Vittoria 97
I-60035 Jesi (Ancona)(IT)

(54) Tuyau isolant pour placement souterrain, procédé pour sa réalisation et machine pour la mise en oeuvre du procédé.

(57) Tuyeau isolant pour placement souterrain réalisé au moyen d'un mélange à densité élevéé de matériaux inertes et de résines, ayant préférablement une longueur et une épaisseur importantes, destiné à être enfilé sur des tuyeauteries et à être réalisé grâce à un procédé constitué essentiellement par une extrusion suivie d'un estampage; pour la mise en oeuvre du procédé on a prévu une machine (6) comprenant une extrudeuse à vis transporteuse à spires épaissies vers la bouche d'extrusion, avec arbre de la vis transporteuse creux (12) pour l'introduction de segments d'éléments tubulaires (5) aptes à faire fonction de moules internes, étant prévus d'autres moules externes (4) à ouverture rapide destinés à être disposés sur la bouche d'extrusion et à être freinés pour permettre d'élever la densité du tuyeau.

EP 0 095 010 A1

./...

FIG. 2

Tuyeau isolant pour placement souterrain, procédé pour sa réalisation et machine pour la mise en oeuvre du procédé.

La présente invention concerne un tuyeau isolant pour placement souterrain, le procédé pour sa réalisation et la machine pour la mise en oeuvre du procédé.

On sait que, quand on place des tuyeauteries souterraines, il est nécessaire de les protéger des courants électriques errants, de les isoler thermiquement et de faire de telle manière qu'ils soient le plus possible à l'abri des tensions mécaniques.

La technique en vigueur prévoit, à ces effets, ou de revêtir les tuyeaux à l'aide de matériaux opportuns au moyen d'une réalisation sur place de une sorte d'estampe dans laquelle on dispose le tuyeau en v effectuant une coulée de matériel isolant, ou bien d'appliquer sur le tuyeau une série de demi-coques formées par des demi-tuyeaux en matériel isolant, coupées par des plans diamétraux qui sont fixés l'un à l'autre sur place, en prévoyant, pour les courbes des conduits, des demi-coques supérieures et inférieures courbées qui reproduisent la courbure et le diamètre des conduits à revêtir: dans le premier cas cité, il est nécéssaire d'employer du personnel spécialisé et des machines particulières pour le coulage de matériel isolant (et en outre, il est nécéssaire d'effectuer telle opération dans des conditions de température et d'humidité ambiantes opportunes) alors que dans le second cas, les demi-coques sont relativement coûteuses et, vu que les lignes de jonction réciproque des demi-coques sont très longues, leur jonction demande un certain soin, et donc également du personnel spécialisé, pour éviter les infiltrations probables dûes justement à la mauvaise effectuation de la jonction.

0095010

Le but technique de la présente invention est la mise au point d'un tu
veau isolant pour placement souterrain qui soit extrêmement valable du
point de vue mécanique, qui isole thermiquement et électriquement de ma
nière optimum et dont l'adoption ne comporte, pour sa mise en oeuvre, ni
la présence de personnel spécialisé, ni la nécéssité de conditions ambiantes particulières.

Dans le cadre de la dite tâche technique, un des buts de la présente in
vention est de mettre au point un procédé et une machine pour la mise en
oeuvre de tel procédé qui permettent de réaliser le tuyeau en question
de manière continue et valable du point de vue économique.

Cette tâche et ces buts sont rejoints par la présente invention qui com
porte un tuyeau isolant pour placement souterrain caractérisé par le fait
qu'il est réalisé par un mélange à densité élevée de matériaux inertes
genre liège granulé séché et de résines genre plastique, les dits tuyeaux
ayant préférablement une longueur et une épaisseur d'une certaine importance et étant aptes à être enfilés sur des conduits ainsi qu'à être fixés
l'un à l'autre par encollage au moyen de résines.

Pour réaliser les tuyeaux selon la présente invention, on suit un procédé
caractérisé par le fait qu'il est du type de l'extrusion suivie d'un estampage obtenu en dirigeant le tuyeau, à l sortie de la bouche d'extru
sion, vers l'espace défini entre les moules, l'un interne et l'autre exter
ne au tuyeau, moules aptes, étant donné que le moule externe est freiné,
à comprimer le matériel qui compose le tuyeau avant sa solidification pour
en élever la densité.

La machine pour la mise en oeuvre du procédé selon l'invention est carac
térisée par le fait d'être constituée par une chambre cylindrique dont
le début est relié à une trémie pour l'alimentation du mélange des maté
riaux constituants le dit tuyeau et où une vis transporteuse à pas variable est en mesure, étant donné le fait que les spires sont épaissies
vers la sortie de la chambre, de comprimer le dit mélange; cette machine
est également caractérisée par le fait que l'arbre de la vis transporteuse en question est creux pour permettre l'introduction du moule interne composé d'une série d'éléments tubulaires qui se greffent l'un à l'autre et que sur l'extrémité de la sortie de la chambre des moules externes sont disposés au fur et à mesure, moules constitués par deux demi-coques cylindriques mises en charnière l'une à l'autre et munies de moyens de fermeture et d'ouverture rapides, étant donné que les dits moules se trouvent sous l'effet d'un groupe de freinage réglable du tuyau qui a le châssis de support solidaire à la chambre, avec le réglage de l'intensité de freinage permettant une densité plus ou moins élevée du tuyau.

D'autres détails apparaîtront plus clairs et plus évidents en suivant la description détaillée du tuyau, du procédé et de la machine selon l'invention, illustrés uniquement à titre indicatif et non pas limitatif, sur le tableau des dessins en annexe, où:

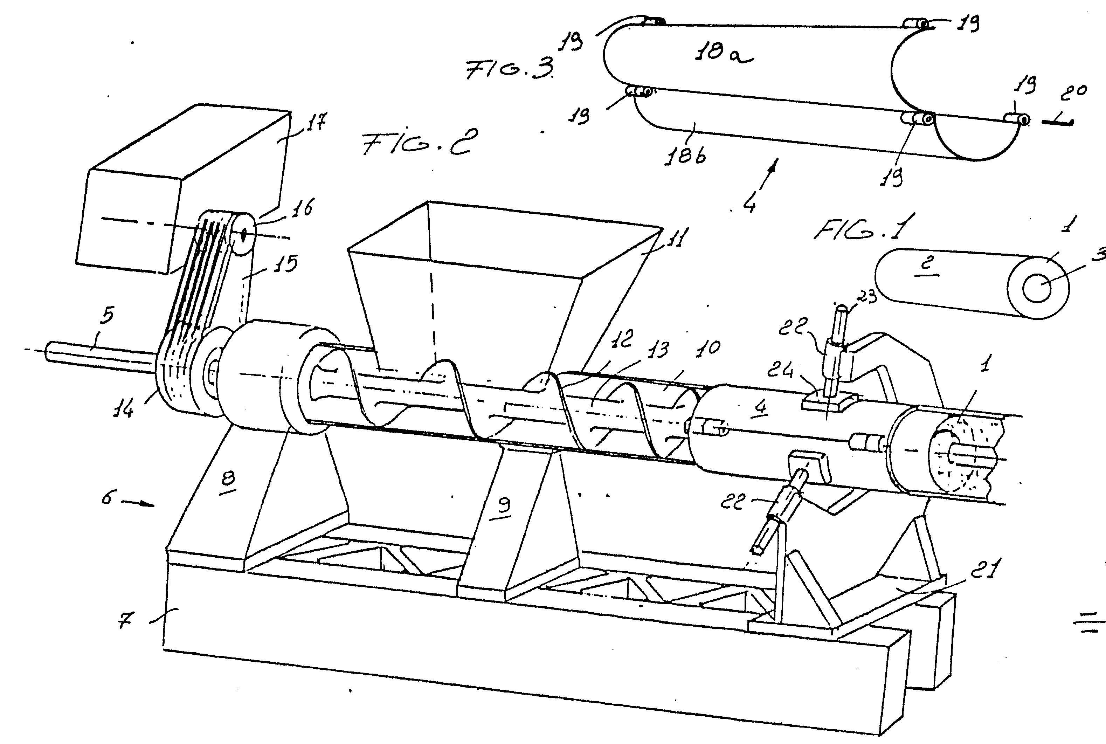

- le dessin 1 est une vue perspective d'une portion du tuyau selon l'invention;

- le dessin 2 est une vue perspective, schématique, de la machine selon l'invention;

- le dessin 3 est une vue perspective d'un moule externe néccéssaire pour la réalisation du tuyau.

En se référant particulièrement à ces dessins, le 1 indique le tuyau selon l'invention, tuyau à surface externe 2 et surface interne 3: le tuyau 1 une épaisseur plutôt importante ainsi qu'une longueur élevée (même plus de 6 mètres) et il est destiné à être enfilé sur les conduits à isoler; pour des longueurs de conduits supérieures à la longueur des tuyaux 1, on prévoit l'encollage de tête l'un à l'autre des tuyaux, grâce à des résines plastiques: pour pouvoir suivre le courbes, on a prévu la réalisation par estampage de demi-coques aptes à revêtir les dites zones et qui sont elles-aussi destinées à être fixées entre elles et aux tuyaux adjacents au moyen d'un encollage effectué sur place.

Le tuyau 1 est réalisé avec un mélange à haute densité de matériaux inertes genre liège granulé séché et de résines genre plastique: uniquement à titre indicatif on donne ci-dessous un exemple de mélange:

EXEMPLE I

Pour Kg. 330 de tuyeau fini: 200 Kg. de liège granulé séché; 130 Kg. de résines.

En ce qui concerne les matériaux inertes, on a relevé comme étant avantageux de prévoir la présence environ / de six parts de liège granulé avec des granulés de diamètre compris entre trois et huit millimètres, de deux parts de liège granulé avec des granulés de diamètre inférieur à un millimètre et d'une part de carbonate de chaux.

En ce qui concerne les résines, elles peuvent être du genre polyester, avantageuse pour leur coût très bas, ou encore du genre thermoplastique ou bien epossydique, ce dernier genre de résines produisant un tuyeau à caractéristiques exceptionnelles mais à un coût plutôt élevé.

Le tuyeau selon l'invention s'obtient par un procédé qui comporte une extrusion du mélange suivie d'une espèce d'estampage entre un moule externe 4 et un autre interne 5: les moules accompagnent le tuyeau extrusé au fur et à mesure jusqu'à che qu'il soit solidifié et le freinage mécanique des moules, particulièrement des moules extérieurs, permet de augmenter la densité du tuyeau même; dès que le tuyeau est solidifié on enlève les moules externes et internes pour leur utilisation sur les autres segments du tuyeau en extrusion.

Pour la réalisation du procédé on a mis au point une machine globalement indiquée par 6.

La machine 6 se compose d'une base solide 7 en profilés métalliques où sont fixés deux supports 8 et 9; au sommet des supports 8 et 9 se fixe une chambre cylindrique 10 fixe ayant un axe préférablement horizontal; la chambre 10 présente au début une ouverture supérieure dans laquelle se jette une trémie 11 que l'on remplit et charge du mélange.

A l'intérieur de la chambre 10 se monte une vis transporteuse 12 avantageusement à deux principes, à pas d'hélice variable qui se réduit au fur et à mesure par les spires toujours plus épaissies vers la sortie; l'arbre 13 de la trémie se prolonge antérieurement au support 8 pour le fixage d'un groupe de poulies 14.

Les poulies 14 sont reliées, par l'intermédiaire de courroies 15 fermées en anneau, aux poulies correspondantes motrices 16 emboîtées sur l'arbre d'un groupe moteur-motoréducteur 17.

L'arbre 13 est traversé longitudinalement par une cavité assiale pour l'introduction des segments de moules internes 5: on peut noter en ou tre,que les moules 5 sont reliés entre eux par l'intermédiaire de douil les à baionnette respectives.

Les moules 4 externes se composent de deux demi-coques 18a, 18b semi-cylindriques qui sont en charnières entre elles le long de deux bords correspondants par l'intermédiaire de boutonnières 19 décalées et accouplées deux/par l'intermédiaire de chevilles: les autres bords des
à deux
demi-coques sont eux-aussi munis de boutonnières 19 décalées qui permettent de bloquer entre elles les demi-coques par l'introduction rapide des goujons respectifs 20.

Un autre support 21 est fixé à la base 7 après le support 9 et il porte solidaires, en étoile par rapport à l'axe du tuyeau, un groupe de trois vérins fluidodynamiques 22; des mâchoires 24 revêtues de matériel de friction (connu par leur nom commercial de ferodo) sont fixées respectivement aux tiges 23 des vérins 22; en mettant en pression les vé rins 22 les mâchoires 24 agissent sur le moule extérieure 4 en freinant ainsi son avancement (dû à l'extrusion du tuyeau) en mesure proportion nelle à la pression appliquée: en réglant la pression d'excercice des vérins il est possible d'obtenir des densités du tuyeau prédéterminées.

Il est évident que la longueur du moule devra être supérieure à la lon gueur nécéssaire au tuyeau extrusé pour solidifier de manière à ce que la pression de la vis transporteuse agisse entre le moule externe, le moule interne et l'extrémité antérieure du tuyeau déjà solidifiée.

On peut ainsi voir comme l'invention rejoint les buts proposés et parti culièrement comme le tuyeau selon l'invention peut être appliqué sim plement par du personnel non spécialisé; en outre, le procédé de réali

0095010

sation et la machine correspondante consentent d'obtenir le tuyeau de manière extrèmement économique.

L'invention ainsi conçue est susceptible de modifications nombreuses et de variantes qui réintègrent toutes la sphère de la conception d'invention décritte.

En outre, tous les détails peuvent être substitués par d'autres techniquement équivalents.

Pratiquement, les matériaux employés, les formes et les dimensions pourront être n'importe lesquelles selon les exigences, sans pour autant sortir de la sphère de protection des revendications suivantes.

STUDIO DI CONSULENZA
BREVETTI - MARCHI
Dott. Ing. CLAUDIO BALDI
V.le della Vittoria 97 - JESI - Tel. 58545

-. 1 -

## Revendications

1) Tuyeau isolant pour placement souterrain caractérisé par le fait qu'il est réalisé d'un mélange à haute densité de matériaux inertes genre liège granulé séché et de résines genre plastique, ces tuyeaux ayant préférablement une longueur et une épaisseur d'une certaine importance et étant aptes à être fixés l'un à l'autre par encollage de résines. Pour la réalisation des tuyeaux selon l'invention on suit un procédé caractérisé par le fait qu'il est du genre de l'extrusion suivie d'un estampage qui est obtenu en dirigeant le tuyeau, à la sortie de la bouche d'extrusion, dans l'espace qui se definit entre un moule interne et un moule externe au tuyeau, moules capables, vu que le moule externe est freiné, à comprimer le matériel qui compose le tuyeau avant sa solidification pour en élever la densité. La machine pour la réalisation du procédé selon l'invention est caractérisée par le fait d'être constituée d'une chambre cylindrique au début de laquelle est reliée une trémie pour l'alimentation du mélange des matériaux constituants le tuyeau et à l'intérieur de laquelle opère une vis transporteuse à pas variable, capable, vu que les spires sont épaissies vers la sortie de la chambre, de comprimer le dit mélange et est caractérisée par le fait que l'arbre de la dite vis est creux pour l'introduction du moule interne constitué par une serie d'éléments tubulaires qui se greffent l'un à l'autre et que sur la extrémité de la sortie de la chambre se disposent au fur et à mesure les moules externes constitués par des demi-coques cylindriques mises en charnière l'une à l'autre et munies de moyens de fermeture et d'ouverture rapides, étant donné que sur les dits moules, un groupe de freinage agit, groupe de freinage réglable du tuyeau qui a le châssis de support solidaire à la chambre, avec le réglage de l'intensité de freina ge pour obtenir une densité plus ou moins élevée du tuyeau.

2) Le tuyeau selon la revendication 1) caractérisé par le fait que les dits matériaux inertes sont du genre liège granulé séché et que les di tes résines sont du genre polyester; avec substantiellement la quanti té en poids du liège étant le double de la quantité de poids des résines.

3) Le tuyeau selon la revendication 1) et en alternative à la revendication 2) caractérisé par le fait que les dites résines soient thermoplastiques ou epossydiques.

4) Machine selon la revendication 1) caractérisée par le fait que le groupe de freinage cité se compose d'au-moins trois vérins fluidodyna miques radiaux et solidaires à la chambre, qui ont les extrémités des tiges mobiles munies de matériel de friction pour freiner la surface des moules externes.

5) Tuyeau isolant pour placement souterrain, procédé pour sa réalisation et machine pour la mise en oeuvre du procédé selon une ou plusieurs revendications précédentes et selon ce qui a été ci-dessus substantiel lement décrit et illustré pour les buts spécifiés.

STUDIO DI CONSULENZA
BREVETTI - MARCHI
Dott. Ing. CLAUDIO BALDI
V.le della Vittoria 97 - JESI - Tel. 58545

FIG.3

FIG.2

FIG.1

0095010
1|1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | B 29 F 3/00 |
| X | GB-A- 657 813 (ARMSTRONG CORK) | 1,2,3, 5 | B 27 J 5/00 |
| | | | F 16 L 59/04 |
| | * Page 2 * | | B 29 F 3/04 |
| | --- | | |
| X | FR-A-2 044 064 (ALEXIS)<br>* En entier * | 1,3,5 | |
| | --- | | |
| X | GB-A- 201 623 (BOND)<br>* Figure 5, page 1, lignes 34-41;<br>page 3, lignes 121-130; page 4,<br>lignes 1-51 * | 1,3,5 | |
| | --- | | |
| X | US-A-2 386 796 (HOFFECKER)<br>* En entier * | 1 | |
| | --- | | DOMAINES TECHNIQUES RECHERCHES (Int. Cl. ³) |
| X,Y | US-A-4 124 347 (MILLER)<br>* Figures 1-7; colonnes 3,4 * | 1 | |
| | --- | | |
| Y | GB-A- 487 991 (ARMSTRONG CORK)<br>* En entier * | 1 | B 29 F 3/00 |
| | | | B 30 B 11/00 |
| | | | B 29 D 23/00 |
| | --- | | B 27 J 5/00 |
| Y | US-A-3 973 922 (WILLIAMS)<br>* En entier * | 1 | F 16 L 59/00 |
| | --- | | |
| A | GB-A- 738 076 (BITUMEX)<br>* Figure * | 1 | |
| | --- | | |
| A | DE-B-1 009 799 (FÜHRER)<br>* Figure * | 1 | |
| | ---     -/- | | |

Le présent rapport de recherche a été établi pour toutes les revendications

| Lieu de la recherche | Date d'achèvement de la recherche | Examinateur |
|---|---|---|
| LA HAYE | 26-01-1983 | KUSARDY R. |

| | | |
|---|---|---|
| Office européen des brevets | **RAPPORT DE RECHERCHE EUROPEENNE** | **0095010** Numéro de la demande |

EP 82 83 0143

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl. ³) |
|---|---|---|---|
| A | US-A-1 679 350 (DICKEY) <br> * En entier * <br><br> --- <br><br> | 1 | |
| A | US-A-3 929 957 (HOLDEN) <br> * En entier * <br><br> ----- | 1 | |
| | | | **DOMAINES TECHNIQUES RECHERCHES (Int. Cl. ³)** |

Le présent rapport de recherche a été établi pour toutes les revendications

| Lieu de la recherche <br> **LA HAYE** | Date d'achèvement de la recherche <br> **26-01-1983** | Examinateur <br> **KUSARDY R.** |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82